# EUROPÄISCHE PATENTSCHRIFT

(11) **EP 0 945 658 B1**
(45) Veröffentlichungstag und Bekanntmachung des Hinweises auf die Patenterteilung: **19.02.2003**
(21) Anmeldenummer: 98810264.6
(22) Anmeldetag: 25.03.1998
(51) Int. Cl.: F16K 37/00, F16K 41/10

(54) **Prozessventil, insbesondere für die sterile Verfahrenstechnik**
Process valve, in particular for sterile manufacturing
Valve de production, en particulier pour la fabrication stérile

(43) Veröffentlichungstag der Anmeldung: 29.09.1999
(73) Patentinhaber: Aseptomag-mts AG, 9042 Speicher AR (CH)
(72) Erfinder: Thoma, Jonas, 9000 St. Gallen (CH)
(74) Vertreter: Wenger, René

(56) Entgegenhaltungen:
- EP-A- 0 584 434
- EP-A- 0 742 398
- CH-A- 660 412
- DE-A- 3 825 575
- DE-A- 4 419 487
- DE-A- 19 603 070
- US-A- 2 691 773
- US-A- 3 765 446
- US-A- 4 901 751
- US-A- 5 285 998
- US-A- 5 662 335

## Beschreibung

Die Erfindung betrifft ein Prozessventil, insbesondere für die sterile Verfahrenstechnik, gemäss dem Oberbegriff von Anspruch 1. Derartige Ventile werden vor allem in der Lebensmitteltechnik eingesetzt, wobei häufig unter sterilen Bedingungen gearbeitet werden muss. Teilweise handelt es sich dabei auch um sogenannte Doppelsitzventile, die einen Ventilknoten an zwei Leitungen für verschiedene Prozessmittel bilden. Der Einsatz von Faltenbälgen vermeidet die Verwendung von gleitenden Dichtungen an den beweglichen Ventilteilen, welche auf Verunreinigung und Leckage besonders anfällig sind.

Um bei der Beschädigung des Faltenbalges die Verunreinigung grösserer Produktechargen zu vermeiden, sind bereits entsprechende Ueberwachungsvorrichtungen vorgeschlagen worden. Gemäss der DE-A-44 19 487 wird der gesamte Balginnenraum mit einer physiologisch unbedenklichen Flüssigkeit, wie z.B. Glycerin gefüllt und über eine Leitung mit einem Behälter verbunden, in welchem das Niveau der Flüssigkeit überwacht wird. Bei einem Riss im Faltenbalg entweicht Flüssigkeit in den Ventilraum und die Niveauabweichung im Behälter führt zu einer Alarmmeldung. Zusätzlich wird auch noch der Leitwert der Flüssigkeit gemessen, wobei ein Eindringen von Prozessmittel ins Innere des Faltenbalges eine Aenderung des Leitwertes verursacht und damit ebenfalls eine Alarmmeldung auslöst.

Eine andere Art der Dichtigkeitsüberwachung wird durch die EP-A-742 398 vorgeschlagen, die allerdings ein Ventil mit einer Membranabdichtung anstelle eines Faltenbalges betrifft. Aufgrund des geringen Ventilhubes genügt die flexible Membran zur Abdichtung des Ventilorgans gegenüber dem Durchflusskanal. Der Hohlraum auf der dem Durchflusskanal abgewandten Seite der Membran ist mit einer inkompressiblen Stützflüssigkeit gefüllt, um bei hohen Drücken eine Beschädigung der Membran zu vermeiden. Die Membran selbst ist mit einem Hohlraumsystem versehen, das mit einer Leckanzeigeeinrichtung verbunden ist. Je nach dem, auf welcher Seite die Membran Beschädigungen aufweist, dringt entweder Prozessmittel oder Stützflüssigkeit in das Hohlraumsystem ein, was zu einer Alarmmeldung führt.

Gemäss der (oberbegriffsmäßige) US-A-2,691,773 wird zwischen zwei separaten Faltenbälgen ein Überwachungszwischenraum gebildet, der mit einer Überwachungsvorrichtung in Wirkverbindung steht. Der Überwachungszwischenraum kann mit einem unter oder über dem Atmosphärendruck liegenden Druck beaufschlagt werden, wobei in beiden Fällen eine Druckveränderung auf eine Leckage schliessen lässt.

Die bekannten Sicherheitsschaltungen arbeiten zwar zuverlässig, erfordern jedoch bei der Inbetriebnahme und bei Servicearbeiten einen erheblichen Mehraufwand. Der Hauptnachteil liegt jedoch darin, dass ein Balgbruch erst gemeldet wird, wenn bereits eine Kontamination des Prozessmittels stattgefunden hat. Die laufende Produktion muss dann unverzüglich unterbrochen werden, was möglicherweise zu einem Verlust der ganzen Charge führt.

Es ist daher eine Aufgabe der vorliegenden Erfindung, ein Prozessventil der eingangs genannten Art zu schaffen, bei dem die Ueberwachung des Faltenbalges mit einfacheren Mitteln und mit einem geringeren Wartungsaufwand möglich ist. Insbesondere aber soll ein Schaden am Faltenbalg möglichst frühzeitig in einem Stadium angezeigt werden, in dem noch keine Kontamination des Prozessmittels stattgefunden hat. Wie bei anderen Ueberwachungssystemen für Verschleissteile soll damit eine Vorwarnung erreicht werden, welche noch einen schadlosen Weiterbetrieb in beschränktem Rahmen ermöglicht. Diese Aufgabe wird erfingungsgemäss mit einem Prozessventil gelöst, das die Merkmale im Anspruch 1 aufweist.

Der Aufbau des Faltenbalges in mehreren Balglagen ermöglicht es auf einfachste Weise, die Balgüberwachung im Ueberwachungszwischenraum zwischen zwei Balglagen durchzuführen. Damit entfällt die sehr aufwendige Füllung des ganzen Balginnenraumes mit einer Kontrollflüssigkeit. Die Ausbildung der atmosphärenseitigen Balglage als Sollbruchlage bewirkt ersichtlicherweise, dass ein ermüdungsbedingter Schaden nach einer bestimmten Anzahl Betriebsstunden immer an dieser Sollbruchlage zuerst auftritt, was aber noch nicht zu einer Kontamination des Prozessmittels führt. Je nach Aufbau und Beschaffenheit der prozessmittelseitigen Balglagen kann der Faltenbalg seine Funktion noch über eine bestimmte Zeit gefahrlos erfüllen. Dabei kann eine laufende Produktion bedenkenlos zu Ende geführt werden, um einen geeigneteren Zeitpunkt für den Balgwechsel zu wählen.

Die Sollbruchlage weist vorteilhaft eine grössere Wandstärke auf, als die prozessmittelseitige Balglage bzw. als alle weiteren Balglagen. Dabei wird von der Erkenntnis ausgegangen, dass diese Lage insgesamt die Stabilität des ganzen Balges zwar erhöht, jedoch infolge der geringeren Flexibilität immer zuerst bricht. Dies gilt insbesondere bei Faltenbälgen aus Metall, insbesondere aus Edelstahl. In bestimmten Fällen wären aber auch Faltenbälge aus anderen Metallen oder aus Kunststoffmaterial denkbar.

Der Faltenbalg, insbesondere der Faltenbalg aus Edelstahl, weist vorteilhaft drei Balglagen auf, wobei der Ueberwachungszwischenraum zwischen der Sollbruchlage und der mittleren Balglage liegt. Die beiden prozessmittelseitigen Balglagen wirken zusammen ebenfalls stabilitätsfördernd, bleiben aber trotzdem flexibel. Versuche haben gezeigt, dass die Standzeit der beiden dünneren Balglagen gut dreimal höher ist, als diejenige der dickeren Sollbruchlage.

Die Wandstärke der Sollbruchlage sollte wenigstens 30 % grösser sein als diejenige der prozessmittelseitigen Balglage bzw. als aller weiteren Balglagen. Besonders vorteilhaft liegt die Wandstärke der Sollbruchlage zwischen 0.15 mm bis 0.19 mm. Gute Resultate mit einem dreilagigen Faltenbalg aus Edelstahl konnten erreicht werden mit einer Wandstärke von je 0.12 mm für die beiden prozessmittelseitigen Balglagen und mit einer Wandstärke von 0.17 mm für die Sollbruchlage. Der Ueberwachungszwischenraum ist vorzugsweise im Bereich der Befestigung des Faltenbalges am Vetilgehäuse über eine Leitung mit der Ueberwachungsvorrichtung verbunden. Grundsätzlich sind bei der vorgeschlagenen Ausbildung des Faltenbalges verschiedene Systeme für die Ueberwachung denkbar.

Besonders vorteilhaft wird der Druck im Ueberwachungszwischenraum überwacht, wobei die Ueberwachungsvorrichtung einen entsprechenden Druckschalter aufweist. Die Drucküberwachung kann dabei ebenfalls mit unterschiedlichen Bezugsgrössen arbeiten. Gemäss einer Variante kann dabei der Ueberwachungszwischenraum und der mit ihm verbundene Teil des Druckschalters gegenüber der Atmosphäre hermetisch abgeschlossen sein und damit ein geschlossenes Hohlraumsystem bilden. Bei erhöhten Arbeitstemparaturen am Prozessmittel dehnt sich die im Hohlraumsystem eingeschlossene Luft aus und erzeugt dabei einen leichten Ueberdruck im System. Der Druckschalter kann dabei auf einen über dem Atmosphärendruck liegenden Wert eingestellt sein und bei einem Druckabfall im Ueberwachungszwischenraum reagieren. Weist die Sollbruchlage nämlich auch nur einen Haarriss auf, erfolgt stets ein Druckausgleich im Ueberwachungszwischenraum und der Druckschalter gibt ein die Störung anzeigendes Steuersignal ab.

Alternativ kann das geschlossene Hohlraumsystem aber auch auf einen unter dem Atmosphärendruck liegenden Wert evakuiert werden, wobei der Druckschalter auf einen unter dem Atmosphärendruck liegenden Wert eingestellt ist. Bei einem Bruch der Sollbruchlage dringt Luft in den Ueberwachungszwischenraum ein, was am Druckschalter als Druckanstieg festgestellt wird.

Schliesslich kann der Ueberwachungszwischenraum aber auch über ein Absperrventil an eine Druckluftquelle oder an eine Vakuumquelle angeschlossen sein, welche jeweils nur zum Zeitpunkt der Produktion einen bestimmten Ueberdruck oder Unterdruck aufbaut. Der Druckschalter wird dabei auf einen bestimmten Nenndruck eingestellt, der durch schliessen des Absperrventils gehalten wird. Bei Abweichungen vom Nenndruck bei geschlossenem Absperrventil reagiert der Druckschalter analog den vorher beschriebenen Beispielen. So kann beispielsweise der Ueberwachungszwischenraum über ein im Betrieb vorhandenes Druckluftnetz mit einem Druck von 0.5 bar beaufschlagt werden. Das Absperrventil ist ein Magnetventil, das beim Erreichen dieses Drucks geschlossen wird. Der Druckschalter wird auf einen Nenndruck von 0.2 bar eingestellt. Sinkt der Druck im Ueberwachungszwischenraum unter diesen Wert, wird der Schaltkontakt im Druckschalter betätigt.

Eine weitere Möglichkeit der Balgüberwachung besteht darin, den Ueberwachungszwischenraum mit einer Kontrollflüssigkeit zu füllen und deren Niveau an einem Expansionsgefäss mit einer Niveausonde zu messen. Dieses Prinzip ist vergleichbar mit dem eingangs beschriebenen Füllen des ganzen Balginnenraumes gemäss Stand der Technik, benötigt aber ersichtlicherweise eine wesentlich kleinere Flüssigkeitsmenge. Ausserdem wird ein autackes Flüssigkeitssystem gebildet und die Flüssigkeit muss beispielsweise bei Wartungsarbeiten an den Ventilorganen nicht abgelassen werden. Bei einem Bruch der Sollbruchlage fliesst die Kontrollflüssigkeit in den Balginnenraum und die damit verbundene Niveauabsenkung bewirkt ein Alarmsignal.

Bei einem an sich bekannten Doppelsitzventil mit zwei voneinander unabhängig betätigbaren Ventilorganen, von denen jedes einen Faltenbalg aufweist, ist wengistens ein Faltenbalg mit einer Ueberwachungsvorrichtung versehen. Die unabhängig betätigbaren Ventilorgane können dabei koaxial angeordnet sein, wobei eine innere Ventilspindel von einem inneren Faltenbalg und eine äussere Ventilspindel von einem äusseren Faltenbalg umgeben ist. Die Überwachungsvorrichtung ist dann vorzugsweise dem äusseren Faltenbalg zugeordnet, der praktisch permanent dem Prozessmittel ausgesetzt ist und der grösseren Belastung unterworfen ist, als der innere Faltenbalg. Alternativ und unabhängig von der Anordung der unabhängig betätigbaren Ventilorgane könnte aber selbstverständlich auch jeder Faltenbalg mit einer eigenen Überwachungsvorrichtung versehen sein. Auf diese Weise kann festgestellt werden, welcher der beiden Faltenbälge ersetzt werden muss.

Ausführungsbeispiele der Erfindung sind in den Zeichnungen dargestellt und werden anschliessend genauer beschrieben. Es zeigen:
- Figur 1: ein als Eckventil ausgebildetes einfaches Prozessventil mit den Merkmalen der Erfindung,
- Figur 2: eine stark vergrösserte Darstellung des Aufbaus eines dreilagigen Faltenbalgs,
- Figur 3: eine schematische Darstellung eines Doppelsitzventils mit zwei Faltenbälgen mit den Merkmalen der Erfindung,
- Figur 4: die schematische Darstellung einer Ueberwachungsvorrichtung nach dem Prinzip der Niveaukontrolle, und
- Figur 5: eine schematische Darstellung einer Ueberwachungsvorrichtung mit Anschluss an eine externe Druckmittelquelle.

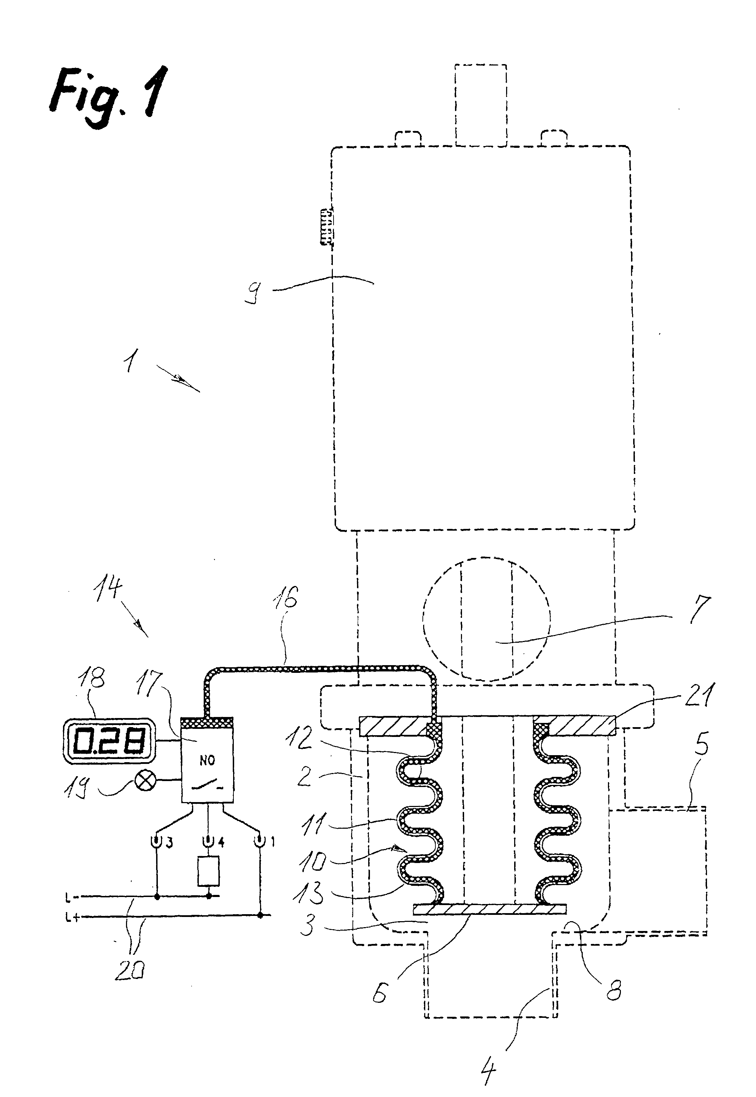

Gemäss Figur 1 ist ein Prozessventil 1 mit einem Ventilgehäuse 2 versehen, das einen Durchlaufkanal 3 für Prozessmittel bildet. Dieser Durchlaufkanal verfügt über Anschlussstutzen 4 und 5 für den Anschluss an Rohrleitungen. Das eigentliche Ventilorgan verfügt über einen Ventilteller 6, der am Ende einer Ventilspindel 7 angeordnet ist. Der Ventilteller kann dichtend gegen einen Ventilsitz 8 gepresst werden. Der Antrieb der Ventilspindel erfolgt an einem Ventilantrieb 9, bei dem es sich um einen hydraulischen, pneumatischen oder um einen elektromotorischen Antrieb handeln kann.

Die Abdichtung zwischen dem Durchlaufkanal 3 und den beweglichen Ventilteilen erfolgt über einen Faltenbalg 10, der die Ventilspindel 7 umschliesst und der sich von einer Befestigungsplatte 21 zum Ventilteller 6 erstreckt. Der Faltenbalg aus Edelstahl verfügt über ausreichende axiale Flexibilität, um den Ventilhub zu kompensieren.

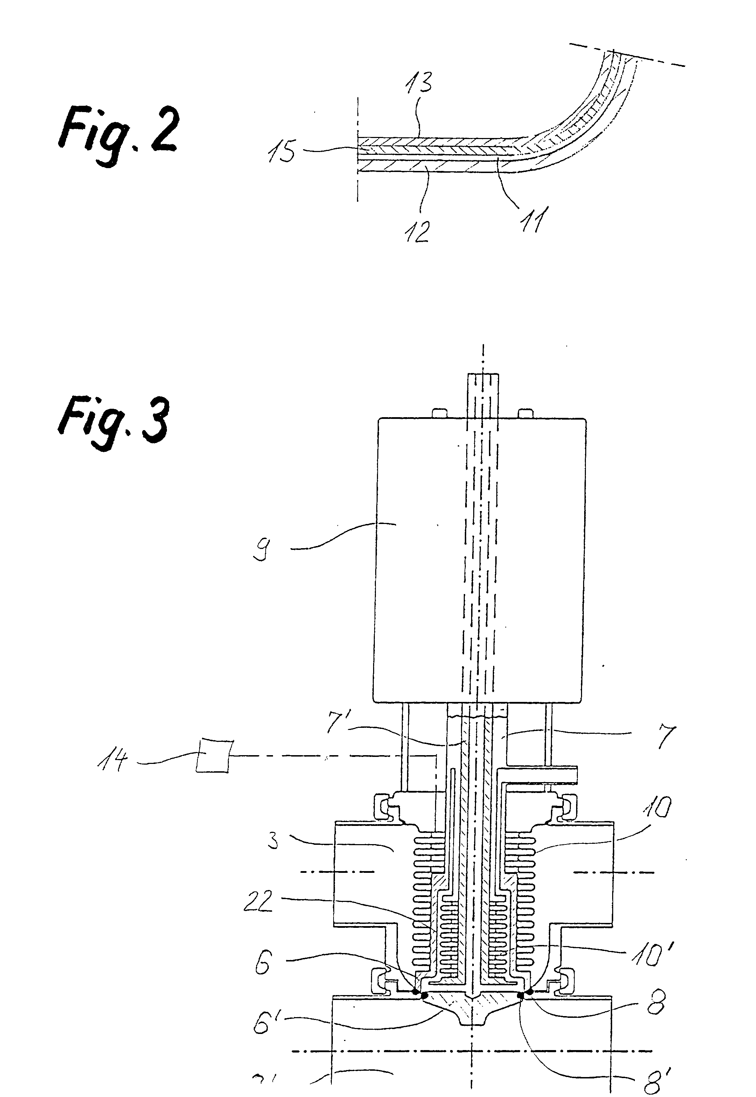

Der Faltenbalg 10 hat beispielsweise den in Figur 2 dargestellten Aufbau mit zwei prozessmittelseitigen dünneren Balglagen 13, 15 und mit einer atmosphärenseitigen etwas dickeren Sollbruchlage 12. Ein Ueberwachungszwischenraum 11 ist zwischen der mittleren Balglage 15 und der Sollbruchlage 12 angeordnet.

Wie Figur 1 zeigt, ist der Ueberwachungszwischenraum 11 an der Befestigungsplatte 21 über eine Leitung 16 mit der Ueberwachungsvorrichtung 14 verbunden. Der Faltenbalg 10 ist an dieser Stelle fest mit der Befestigungsplatte 21 verschweisst, wobei die Leitung 16 über geeignete Anschlussmittel lösbar angeschlossen ist.

Die Ueberwachungsvorrichtung 14 arbeitet im vorliegenden Fall nach dem eingangs beschriebenen Prinzip des Ueberdrucks, der sich bei einer Sterilisation mit Temperaturen von über 100° Celsius im Ueberwachungszwischenraum 11 aufbaut. Der Druckschalter 17 kann auf einen bestimmten Nenndruck eingestellt werden. Eine Digitalanzeige 18 zeigt jeweils permanent den aktuellen Druck im Ueberwachungszwischenraum. Der Druckschalter 17 ist über Schaltersteuerleitungen 20 mit einer hier nicht näher dargestellten Steuervorrichtung verbunden. Mit 19 ist eine Kontrollampe dargestellt, die eine intakte Sollbruchlage optisch anzeigt. Die Abfrage über die Integrität des Faltenbalges 10 erfolgt jeweils kurz vor der Haltezeit einer Sterilisation. Liegt dann der Druck im Ueberwachungszwischenraum zwischen 0.2 bar und 0.8 bar, schliesst ein Kontakt im Druckschalter. Der Balg ist integer und das Signal kann von der Steuerung ausgewertet werden. Kann jedoch kein Ueberdruck ermittelt werden, löst der Druckschalter ein Alarmsignal aus und die Kontrollampe 19 erlischt. Der Faltenbalg muss bei nächster Gelegenheit ausgewechselt werden. Dies könnte über das Steuersignal auch noch zusätzlich über eine Warnlampe oder über ein Display angezeigt werden.

Figur 3 zeigt schematisch ein an sich bekanntes Doppelsitzventil, wie es beispielsweise in der DE 196 03 070 ausführlicher beschrieben ist. Eine erste Ventilspindel 7 ist mit einem ersten Ventilteller 6 versehen, der jedoch topfförmig ausgebildet ist und der mit einem ersten Ventilsitz 8 zusammenwirkt. Konzentrisch innerhalb der ersten Ventilspindel 7 ist eine zweite Ventilspindel 7' angeordnet und unabhängig bewegbar. Am Ende der zweiten Ventilspindel 7' sitzt ein zweiter Ventilteller 6', der mit einem zweiten Ventilsitz 8' zusammenwirkt. Die beiden über den Ventilantrieb 9 unabhängig voneinander aktivierbaren Ventilorgane sind mit einem ersten Faltenbalg 10 bzw. mit einem zweiten Faltenbalg 10' gegenüber dem ersten Durchlaufkanal 3 bzw. dem zweiten Durchlaufkanal 3' abgedichtet. Zwischen den beiden Faltenbälgen wird ein Leckageraum 22 gebildet. Beide Ventilteller 6 und 6' können unabhängig voneinander die beiden Durchlaufkanäle 3 und 3' voneinander trennen. Gleichzeitig können die beiden Ventilteller aber auch zusammengeschoben und gemeinsam angehoben werden, sodass bei abgeschlossenem Leckageraum 22 die beiden Durchlaufkanäle miteinander verbunden sind. Der innere Faltenbalg 10' ist in der Regel völlig von der topfförmigen äusseren Ventilspindel 7 umgeben. Der innere Faltenbalg hat nur die Aufgabe den Leckageraum 22 gegenüber der inneren Ventilspindel 7' abzudichten. Aus diesem Grund ist vorzugsweise nur der äussere, praktisch dauernd von Prozessmitteln beaufschlagte Faltenbalg 10 mit einer Überwachungsvorrichtung versehen. Der innere Faltenbalg 10' könnte daher einen ganz normalen Aufbau haben. Es wäre aber auch denkbar, beide Faltenbälge erfindungsgemäss auszurüsten und mit je einer separaten Überwachungsvorrichtung zu versehen.

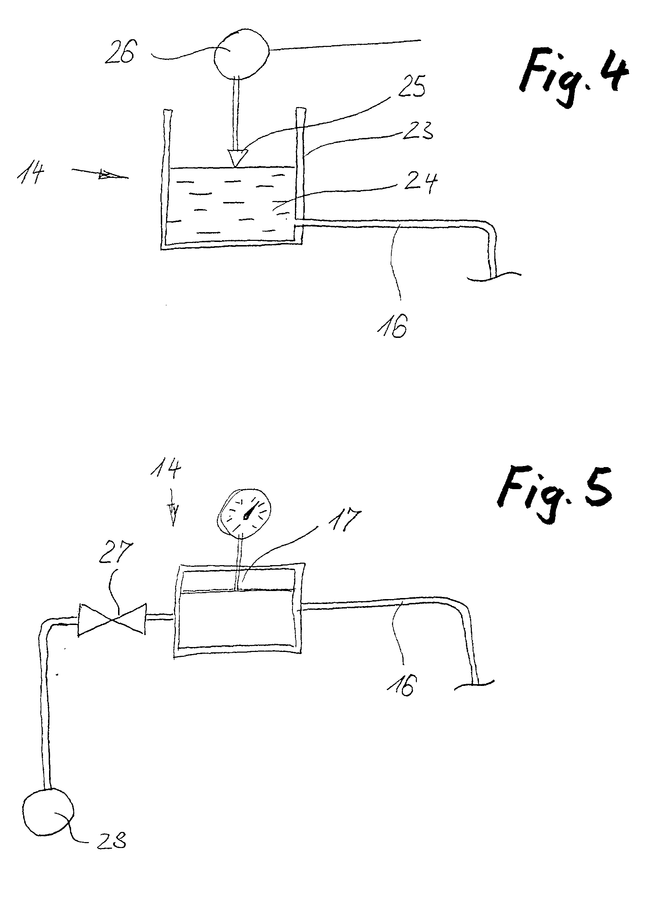

Figur 4 zeigt eine Ueberwachungsvorrichtung 14 mit einem Expansionsgefäss 23, das über die Leitung 16 mit dem Ueberwachungszwischenraum am Faltenbalg kommuniziert. Das Niveau einer Kontrollflüssigkeit 24 kann mittels einer Niveausonde 25 überwacht werden. Fliesst Kontrollflüssigkeit aus einem beschädigten Faltenbalg ab, sinkt das Niveau im Expansionsgefäss 23 und die Niveausonde 25 betätigt einen Schalter 26 zur Bildung eines Steuersignals.

Bei der Ueberwachungsvorrichtung gemäss Figur 5 kann das Hohlraumsystem im Faltenbalg an eine Druckmittelquelle 28 oder ggf auch an eine Vakuumquelle angeschlossen werden. Der so aufgebaute Ueberdruck oder Unterdruck wird durch Schliessen eines Magnetventils 27 gehalten, wobei der Druckschalter 17 auf Druckänderungen reagiert. Diese Anordnung hat den Vorteil, dass das Hohlraumsystem am Faltenbalg nicht permanent hermetisch gegenüber der Atmosphäre abgedichtet sein muss.

Selbstverständlich wären auch noch alternative Ueberwachungsvorrichtungen denkbar. So könnte beispielsweise das Hohlraumsystem auch mit einem Inertgas gefüllt werden, wobei die Ueberwachungsvorrichtung einen Gasdetektor aufweist, der auf Veränderungen der Gaszusammensetzung reagiert.

## Patentansprüche

1. Prozessventil, insbesondere für die sterile Verfahrestechnik, mit einem Ventilgehäuse (2), das wenigstens einen von Prozessmittel durchströmten Durchlaufkanal (3) bildet, mit wenigstens einem beweglichen Ventilorgan (6, 7) im Durchlaufkanal und mit wenigstens einem Faltenbalg (10) zum Abdichten des Durchlaufkanals gegenüber den atmosphärenseitigen Teilen des beweglichen Ventilorgans, wobei die Dichtigkeit des Faltenbalges mit einer Ueberwachungsvorrichtung (14) feststellbar ist, die mit einem Überwachungszwischenraum (11) in Wirkverbindung steht, **dadurch gekennzeichnet, dass** der Faltenbalg (10) wenigstens zwei Balglagen (12, 13) aufweist, dass der Überwachungszwischenraum (11) zwischen den Balglagen angeordnet ist und dass die atmosphärenseitige Balglage (12) gegenüber der prozessmittelseitigen Balglage (13) als Sollbruchlage ausgebildet ist.

2. Prozessventil nach Anspruch 1, **dadurch gekennzeichnet, dass** die Sollbruchlage (12) eine grössere Wandstärke aufweist als die prozessmittelseitige Balglage (13) bzw. als alle weiteren Balglagen (15).

3. Prozessventil nach Anspruch 1 oder 2, **dadurch gekennzeichnet, dass** der Faltenbalg (10) drei Balglagen (12, 13, 15) aufweist, und dass der Ueberwachungszwischenraum (11) zwischen der Sollbruchlage (12) und der mittleren Balglage (15) liegt.

4. Prozessventil nach einem der Ansprüche 1 bis 3, **dadurch gekennzeichnet, dass** der Faltenbalg (10) aus Metall, insbesondere aus Edelstahl besteht.

5. Prozessventil nach Anspruch 4 und einem der Ansprüche 2 oder 3, **dadurch gekennzeichnet, dass** die Wandstärke der Sollbruchlage (12) wenigstens 30 % grösser ist, als diejenige der prozessmittelseitigen Balglage (13) bzw. als aller weiteren Balglagen.

6. Prozessventil nach Anspruch 5, **dadurch gekennzeichnet, dass** die Sollbruchlage (12) eine Wandstärke zwischen 0.15 mm bis 0.19 mm aufweist.

7. Prozessventil nach einem der Ansprüche 1 bis 6, **dadurch gekennzeichnet, dass** der Ueberwachungszwischenraum (11) im Bereich der Befestigung (21) des Faltenbalges (10) am Ventilgehäuse (2) über eine Leitung (16) mit der Ueberwachungsvorrichtung (14) verbunden ist.

8. Prozessventil nach einem der Ansprüche 1 bis 7, **dadurch gekennzeichnet, dass** die Ueberwachungsvorrichtung (14) einen Druckschalter (17) aufweist, der bei Druckveränderungen im Ueberwachungszwischenraum (11) reagiert.

9. Prozessventil nach Anspruch 8, **dadurch gekennzeichnet, dass** der Ueberwachungszwischenraum (11) und der mit ihm verbundene Teil des Druckschalters gegenüber der Atmosphäre hermetisch abgeschlossen ist.

10. Prozessventil nach Anspruch 8, **dadurch gekennzeichnet, dass** der Druckschalter (17) auf einen über dem Atmosphärendruck liegenden Wert eingestellt ist und bei einem Druckabfall im Ueberwachungszwischenraum (11) reagiert.

11. Prozessventil nach Anspruch 8, **dadurch gekennzeichnet, dass** der Druckschalter (17) auf einem unter dem Atmosphärendruck liegenden Wert eingestellt ist, und dass der Ueberwachungszwischenraum auf einen unter dem Atmosphärendruck liegenden Wert evakuiert ist, wobei der Druckschalter bei einem Druckanstieg reagiert.

12. Prozessventil nach Anspruch 8, **dadurch gekennzeichnet, dass** der Ueberwachungszwischenraum (11) über ein Absperrventil (27) an eine Druckmittelquelle (28) oder an eine Vakuumquelle anschliessbar ist, und dass der Druckschalter (17) auf einen Nenndruck eingestellt ist, der bei geöffnetem Absperrventil erreicht wird, wobei der Druckschalter bei Abweichungen vom Nenndruck bei geschlossenem Absperrventil reagiert.

13. Prozessventil nach einem der Ansprüche 1 bis 7, **dadurch gekennzeichnet, dass** der Ueberwachungszwischenraum (11) mit einer Kontrollflüssigkeit (24) gefüllt ist, dass die Ueberwachungsvorrichtung (14) ein Expansionsgefäss (23) für die Kontrollflüssigkeit aufweist, das mit einer Niveausonde (25) versehen ist, wobei die Niveausonde auf eine Niveauabsenkung im Expansionsgefäss reagiert.

14. Prozessventil nach einem der Ansprüche 1 bis 13, **dadurch gekennzeichnet, dass** es ein Doppelsitzventil mit zwei unabhängig betätigbaren Ventilorganen (6, 7 bzw. 6', 7') ist, von denen jedes einen Faltenbalg (10, 10') aufweist, und dass wenigstens einem Faltenbalg eine Ueberwachungsvorrichtung (14) zugeordnet ist.

15. Prozessventil nach Anspruch 14, **dadurch gekennzeichnet, dass** die unabhängig betätigbaren Ventilorgane (6,7 bzw. 6', 7') koaxial angeordnet sind, wobei eine innere Ventilspindel (7') von einem inneren Faltenbalg (10') und eine äussere Ventilspindel (7) von einem äusseren Faltenbalg (10) umgeben ist, und dass die Überwachungsvorrichtung (14) dem äusseren Faltenbalg (10) zugeordnet ist.

## Claims

1. Process valve, in particular for sterile process technology, with a valve housing (2) forming at least one through passage (3) for the flow of a process medium, with at least one movable valve element (6, 7) located in the through passage and with at least one bellows (10) for sealing the through passage against the parts of the movable valve element exposed to the atmosphere, the tightness of the bellows being detectable by a monitoring device (14) interactively connected to a monitoring gap (11), **characterised in that** the bellows (10) has at least two bellows layers (12, 13), **in that** the monitoring gap (11) is located between the bellows layers, and **in that** the bellows layer (12) exposed to the atmosphere is designed as a predetermined breaking layer relative to the bellows layer (13) located at the centre of the process.

2. Process valve according to claim 1, **characterised in that** the predetermined breaking layer (12) has a greater wall thickness than the bellows layer (13) located at the centre of the process or any further bellows layers (15).

3. Process valve according to claim 1 or 2, **characterised in that** the bellows (10) has three bellows layers (12, 13, 15) and **in that** the monitoring gap (11) is located between the predetermined breaking layer (12) and the intermediate bellows layer (15).

4. Process valve according to any of claims 1 to 3, **characterised in that** the bellows (10) is made of metal, in particular special steel.

5. Process valve according to claim 4 and claim 2 or 3, **characterised in that** the wall thickness of the predetermined breaking layer (12) is at least 30% greater than that of the bellows layer (13) located at the centre of the process or any further bellows layers.

6. Process valve according to claim 5, **characterised in that** the predetermined breaking layer (12) has a wall thickness between 0.15 mm and 0.19 mm.

7. Process valve according to any of claims 1 to 6, **characterised in that** the monitoring gap (11) is connected to the monitoring device (14) via a line (16) in the area of the mounting (21) of the bellows (10) on the valve housing (2).

8. Process valve according to any of claims 1 to 7, **characterised in that** the monitoring device (14) is provided with a pressure switch (17) reacting to pressure changes in the monitoring gap (11).

9. Process valve according to claim 8, **characterised in that** the monitoring gap (11) and the part of the pressure switch connected thereto are hermetically sealed against the atmosphere.

10. Process valve according to claim 8, **characterised in that** the pressure switch (17) is set to a value above atmospheric pressure and reacts to a pressure drop in the monitoring gap (11).

11. Process valve according to claim 8, **characterised in that** the pressure switch (17) is set to a value below atmospheric pressure and **in that** the monitoring gap is evacuated to a value below atmospheric pressure, the pressure switch reacting to a pressure increase.

12. Process valve according to claim 8, **characterised in that** the monitoring gap (11) can be connected to a pressure medium source (28) or a vacuum source via an isolating valve (27), and **in that** the pressure switch (17) is set to a nominal pressure reached when the isolating valve is open, the pressure switch reacting to deviations from nominal pressure when the isolating valve is closed.

13. Process valve according to any of claims 1 to 7, **characterised in that** the monitoring gap (11) is filled with a control fluid (24), and **in that** the monitoring device (14) is provided with an expansion tank (23) for the control fluid, this being provided with a level sensor (25) reacting to a drop in the level in the expansion tank.

14. Process valve according to any of claims 1 to 13, **characterised in that** it is designed as a double-seat valve with two independently operated valve elements (6, 7 or 6', 7' respectively), each being provided with a bellows (10, 10'), and **in that** a monitoring device (14) is assigned to at least one of the bellows.

15. Process valve according to claim 14, **characterised in that** the independently operated valve elements (6, 7 or 6', 7' respectively) are arranged coaxially, an inner valve spindle (7') being surrounded by an inner bellows (10') and an outer valve spindle (7) being surrounded by an outer bellows (10), and **in that** the monitoring device (14) is assigned to the outer bellows (10).

## Revendications

1. Soupape de traitement, en particulier pour les procédés industriels stériles, comportant une enveloppe de soupape (2) qui définit au moins un conduit de passage (3) traversé par un produit de traitement, au moins un organe de soupape mobile (6, 7) dans le conduit de passage, et au moins un soufflet (10) pour l'étanchéité du conduit par rapport aux parties de l'organe de soupape mobile qui sont situées côté atmosphère, l'étanchéité du soufflet pouvant être constatée à l'aide d'un dispositif de surveillance (14) qui est en relation fonctionnelle avec un espace intermédiaire de surveillance (11), **caractérisée en ce que** le soufflet (10) comporte au moins deux couches de soufflet (12, 13), **en ce que** l'espace intermédiaire de surveillance (11) est disposé entre les couches de soufflet, et **en ce que** la couche de soufflet (12) située côté atmosphère est conçue comme une couche de rupture par rapport à la couche de soufflet (13) situé côté produit de traitement.

2. Soupape de traitement selon la revendication 1, **caractérisée en ce que** la couche de rupture (12) présente une plus grande épaisseur de paroi que la couche de soufflet (13) située côté produit de traitement ou que toutes les autres couches de soufflet (15).

3. Soupape de traitement selon la revendication 1 ou 2, **caractérisée en ce que** le soufflet (10) comporte trois couches de soufflet (12, 13, 15), et **en ce que** l'espace intermédiaire de surveillance (11) est situé entre la couche de rupture (12) et la couche de soufflet centrale (15).

4. Soupape de traitement selon l'une des revendications 1 à 3, **caractérisée en ce que** le soufflet (10) est en métal, en particulier en acier spécial.

5. Soupape de traitement selon la revendication 4 et la revendication 2 ou 3, **caractérisée en ce que** l'épaisseur de paroi de la couche de rupture (12) est d'au moins 30 % supérieure à celle de la couche de soufflet (13) située côté produit de traitement ou de toutes les autres couches de soufflet.

6. Soupape de traitement selon là revendication 5, **caractérisée en ce que** la couche de rupture (12) présente une épaisseur de paroi de 0,15 mm à 0,19 mm.

7. Soupape de traitement selon l'une des revendications 1 à 6, **caractérisée en ce que** l'espace intermédiaire de surveillance (11) est relié au dispositif de surveillance (14), dans la zone de la fixation (21) du soufflet (10) à l'enveloppe de soupape (2), par l'intermédiaire d'une ligne (16).

8. Soupape de traitement selon l'une des revendications 1 à 7, **caractérisée en ce que** le dispositif de surveillance (14) comporte un commutateur à pression (17) qui réagit en présence de variations de pression dans l'espace intermédiaire de surveillance (11).

9. Soupape de traitement selon la revendication 8, **caractérisée en ce que** l'espace intermédiaire de surveillance (11) et la partie du commutateur à pression reliée à celui-ci sont fermés hermétiquement par rapport à l'atmosphère.

10. Soupape de traitement selon la revendication 8, **caractérisée en ce que** le commutateur à pression (17) est réglé à une valeur supérieure à la pression atmosphérique et réagit en présence d'une baisse de pression dans l'espace intermédiaire de surveillance (11).

11. Soupape de traitement selon la revendication 8, **caractérisée en ce que** le commutateur à pression (17) est réglé à une valeur inférieure à la pression atmosphérique, et **en ce que** l'espace intermédiaire de surveillance est évacué jusqu'à une valeur inférieure à la pression atmosphérique, le commutateur à pression réagissant à une augmentation de pression.

12. Soupape de traitement selon la revendication 8, **caractérisée en ce que** l'espace intermédiaire de surveillance (11) est apte à être relié par l'intermédiaire d'une soupape d'arrêt (27) à une source d'agent de pression (28) ou à une source de vide, et **en ce que** le commutateur à pression (17) est réglé à une pression nominale qui est atteinte lorsque ladite soupape d'arrêt est ouverte, le commutateur à pression réagissant en présence d'écarts par rapport à la pression nominale alors que la soupape d'arrêt est fermée.

13. Soupape de traitement selon l'une des revendications 1 à 7, **caractérisée en ce que** l'espace intermédiaire de surveillance (11) est rempli d'un liquide de contrôle (24), et **en ce que** le dispositif de surveillance (14) comporte un récipient d'expansions (23), pour le liquide de contrôle, qui est pourvu d'une sonde de niveau (25), laquelle sonde de niveau réagit à une baisse du niveau dans le récipient d'expansion.

14. Soupape de traitement selon l'une des revendications 1 à 13, **caractérisée en ce qu'**il s'agit d'une soupape à double siège avec deux organes de soupape (6, 7 et 6', 7') à actionnement indépendant, qui comportent chacun un soufflet (10, 10'), et **en ce qu'**un dispositif de surveillance (14) est associé à au moins un soufflet.

15. Soupape de traitement selon la revendication 14, **caractérisée en ce que** les organes de soupape (6, 7 et 6', 7') à actionnement indépendant sont disposés coaxialement, une tige de soupape intérieure (7') étant entourée par un soufflet intérieur (10') tandis qu'une tige de soupape extérieure (7) est entourée par un soufflet extérieur (10), et **en ce que** le dispositif de surveillance (14) est associé au soufflet extérieur (10).
